# EUROPEAN PATENT SPECIFICATION

(11) **EP 4 654 569 B1**
(45) Date of publication and mention of the grant of the patent: **22.07.2026**
(21) Application number: 25153510.0
(22) Date of filing: 23.01.2025
(51) Int. Cl.: H04N 1/00, H04N 1/32

(54) **INFORMATION PROCESSING SYSTEM, PROGRAM, AND INFORMATION PROCESSING METHOD**
INFORMATIONSVERARBEITUNGSSYSTEM, PROGRAMM UND INFORMATIONSVERARBEITUNGSVERFAHREN
SYSTÈME, PROGRAMME ET PROCÉDÉ DE TRAITEMENT D'INFORMATIONS

(30) Priority: 20.05.2024 JP 2024082089
(43) Date of publication of application: 26.11.2025
(73) Proprietor: FUJIFILM Business Innovation Corp., Minato-ku Tokyo (JP)
(72) Inventor: HARADA, Masahide, Yokohama-shi, Kanagawa (JP)
(74) Representative: Kurig, Thomas

(56) References cited:
- JP-A- 2009 239 365
- JP-A- 2009 276 919

## Description

### Background

### (i) Technical Field

The present disclosure relates to an information processing system, a program, and an information processing method.

### (ii) Related Art

Japanese Unexamined Patent Application Publication JP 2009 276919 A discloses an image information processing apparatus including a reception unit, a determination unit, a generation unit, and an output unit. The reception unit receives an input of an image formation instruction. The determination unit determines whether additional information can be included in the image formation instruction received. The generation unit generates a pseudo image formation instruction which is processed together with the image formation instruction and includes additional information, when a result of the determination indicates that the additional information cannot be included in the image formation instruction received. The output unit outputs the image formation instruction received, and outputs the pseudo image formation instruction when the pseudo image formation instruction is generated.
JP 2009 239365 A discloses an image forming apparatus including a setting storage unit that stores setting information related to image formation of an image forming apparatus, and a code generation unit that generates a two-dimensional code arranged two-dimensionally based on the setting information stored in the setting storage unit. The image forming apparatus forms an image of a two-dimensional code on a medium includes a guide information generation unit that generates guide information for guiding the use of the medium, and forms an image of the two-dimensional code generated by the code generation unit on the medium.

### Summary

As an information processing system, an information processing system including an image forming apparatus, a storage unit, and a processor is conceivable. The image forming apparatus executes image forming processing of forming an image based on image information. The storage unit stores information recognized as the image information outside the image forming apparatus. The processor generates image information and transmits the image information to the storage unit.

Here, in the information processing system, information other than the image information is not recognized as the image information by the storage unit, and thus cannot be stored in the storage unit. Therefore, it is necessary to separately provide a storage unit for storing the other information.

The present invention is provided in the appended claims. The following disclosure serves a better understanding of the present invention. Accordingly, it is an object of the present disclosure to enable information other than image information to be stored in a storage unit.

According to a first aspect of the present disclosure, there is provided an information processing system including: a storage unit configured to store information recognized as image information, outside an image forming apparatus configured to execute image forming processing of forming an image based on the image information; and a processor configured to generate pseudo information including recognition information causing recognition as the image information by the storage unit and information other than the image information, and transmit the pseudo information to the storage unit.

According to a second aspect of the present disclosure, in the information processing system according to the first aspect, the processor may be configured to generate the pseudo information including retained information retained by the image forming apparatus as the other information.

According to a third aspect of the present disclosure, in the information processing system according to the second aspect, the processor may be configured to generate, when the image forming apparatus changes a setting, the pseudo information including setting information before the change as the retained information.

According to a fourth aspect of the present disclosure, in the information processing system according to the third aspect, the processor may be configured to cause, when the change of the setting in the image forming apparatus is inappropriate, the storage unit to transmit the setting information before the change to the image forming apparatus.

According to a fifth aspect of the present disclosure, in the information processing system according to the first aspect, the processor may be configured to generate the pseudo information including image information.

According to a sixth aspect of the present disclosure, in the information processing system according to the fifth aspect, the processor may be configured to generate the pseudo information including image information having a notification content to be notified to a user.

According to a seventh aspect of the present disclosure, there is provided a program causing a computer to execute a process for information processing, the process including: generating pseudo information including recognition information causing recognition as image information by a storage unit configured to store information recognized as the image information, outside an image forming apparatus configured to execute image forming processing of forming an image based on the image information, and information other than the image information; and transmitting the pseudo information to the storage unit.

According to an eighth aspect of the present disclosure, there is provided an information processing method including: generating pseudo information including recognition information causing recognition as image information by a storage unit configured to store information recognized as the image information, outside an image forming apparatus configured to execute image forming processing of forming an image based on the image information, and information other than the image information; and transmitting the pseudo information to the storage unit.

According to the configuration of the first aspect, the information other than the image information can be stored in the storage unit.

According to the configuration of the second aspect, the information retained by the image forming apparatus can be stored in the storage unit.

According to the configuration of the third aspect, when the image forming apparatus changes the setting, the setting information before the change can be stored in the storage unit.

According to the configuration of the fourth aspect, when the change of the setting in the image forming apparatus is inappropriate, the setting of the image forming apparatus can be returned to the setting before the change.

According to the configuration of the fifth aspect, the image forming apparatus can execute the image forming processing based on the pseudo information.

According to the configuration of the sixth aspect, a notification can be given to the user via the image formed by the image forming apparatus.

According to the configuration of the seventh aspect, the information other than the image information can be stored in the storage unit.

According to the configuration of the eighth aspect, the information other than the image information can be stored in the storage unit.

### Brief Description of the Drawings

Exemplary embodiments of the present disclosure will be described in detail based on the following figures, wherein:
Fig. 1 is a schematic view illustrating an example of an information processing system according to the present exemplary embodiment;
Fig. 2 is a block diagram illustrating an example of a hardware configuration of a server apparatus according to the present exemplary embodiment;
Fig. 3 is a block diagram illustrating an example of a functional configuration of the server apparatus according to the present exemplary embodiment;
Fig. 4 is a schematic view illustrating an example of a structure of image forming data according to the present exemplary embodiment;
Fig. 5 is a block diagram illustrating an example of a hardware configuration of an image forming apparatus according to the present exemplary embodiment;
Fig. 6 is a block diagram illustrating an example of a functional configuration of the image forming apparatus according to the present exemplary embodiment;
Fig. 7 is a schematic view illustrating an example of a structure of pseudo information according to the present exemplary embodiment; and
Fig. 8 is a flowchart illustrating an example of a flow of generation processing executed in the image forming apparatus according to the present exemplary embodiment.

### Detailed Description

Hereinafter, an example of an exemplary embodiment according to the present disclosure will be described with reference to the drawings.

### <Information processing system 10>

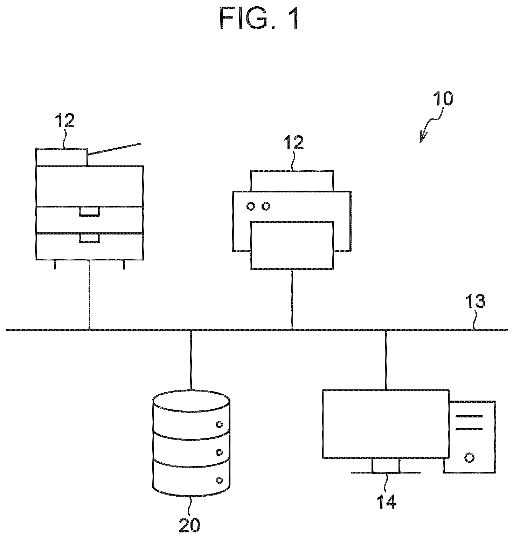

An information processing system 10 according to the present exemplary embodiment will be described. Fig. 1 is a schematic view illustrating the information processing system 10 according to the present exemplary embodiment.

The information processing system 10 is a system that processes image information. Specifically, the information processing system 10 is a system that forms an image on a recording medium based on image information. As illustrated in Fig. 1, the information processing system 10 includes, for example, a plurality of image forming apparatuses 12, an instruction apparatus 14, and a server apparatus 20.

As illustrated in Fig. 1, the parts of the information processing system 10 are connected to each other by a communication line 13. The communication line 13 is, for example, a communication line using at least one of wired communication and wireless communication. Specifically, for example, various networks such as a local area network (LAN) and the Internet can be used as the communication line 13. Hereinafter, each part of the information processing system 10 will be described.

### <Instruction apparatus 14>

The instruction apparatus 14 is an apparatus with which a user gives various instructions to the parts (each image forming apparatus 12 and the server apparatus 20) of the information processing system 10. For example, the user can issue an acquisition instruction to the image forming apparatus 12 for acquiring various types of information (for example, setting information) using the instruction apparatus 14.

As an example, a general-purpose computer apparatus (user terminal) such as a personal computer (PC) is used as the instruction apparatus 14.

### <Server apparatus 20>

The server apparatus 20 is an example of a storage unit and is an apparatus that executes various types of processing including storage processing of storing image forming data including image information, outside the image forming apparatus 12.

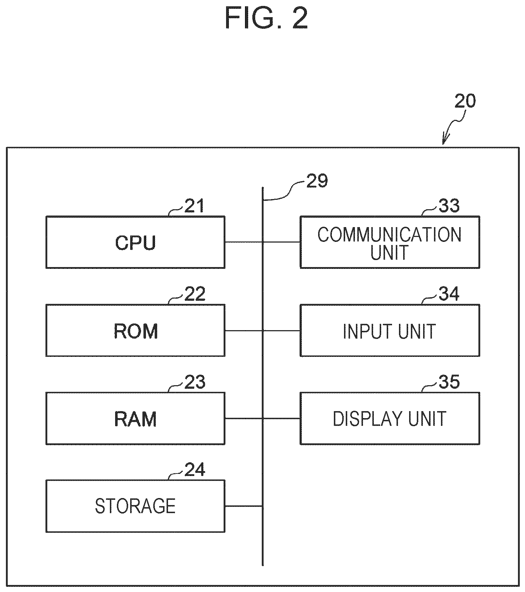

Specifically, the server apparatus 20 has functions of a computer, and as illustrated in Fig. 2, includes a central processing unit (CPU) 21, a read only memory (ROM) 22, a random access memory (RAM) 23, a storage 24, a communication unit 33, an input unit 34, and a display unit 35.

The parts of the server apparatus 20 are connected to each other by, for example, a bus 29. Note that the server apparatus 20 is not limited to a configuration of a single server apparatus, and may be configured by a plurality of server apparatuses.

The communication unit 33 is a communication interface and is a component for communicating with other apparatuses such as the image forming apparatus 12 and the instruction apparatus 14. Specifically, the communication unit 33 communicates with other apparatuses through the communication line 13 using at least one of wired communication and wireless communication.

The input unit 34 is a component to which an instruction is input by a user. Specifically, the input unit 34 includes, for example, an input key (for example, a keyboard, an operation button, or the like), a touch panel, and the like on which an input operation is performed by a user.

The display unit 35 displays presentation information to be presented to the user for notifying the user of the presentation information. The display unit 35 includes, as an example, a liquid crystal display, an organic electro luminescence (EL) display, and the like.

The display unit 35 may function as the input unit 34. In this case, as an example, the input unit is configured by a touch panel of a resistive film type, a capacitance type, or the like, and an instruction from the user is input through a contact operation by the user.

The CPU 21 is a central processing unit, and executes various programs including an information processing program and controls each part. The ROM 22 stores the various programs including the information processing program and various types of data. The RAM 23 serves as a work area to temporarily store a program or data. The storage 24 is configured by a storage medium such as a hard disk drive (HDD), a solid state drive (SSD), or a flash memory, and stores various programs including an operating system and various types of data. Note that the information processing program may be stored in the storage 24.

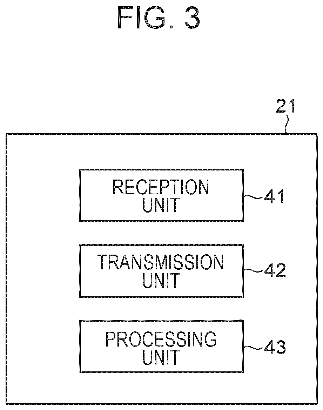

In the server apparatus 20, the CPU 21 reads various programs including the information processing program from the ROM 22 or the storage 24, and executes the programs using the RAM 23 as a work area. The CPU 21 realizes various functions by executing the information processing program. Functional configurations realized by cooperation between the CPU 21 as a hardware resource and the information processing program as a software resource will be described. Fig. 3 is a block diagram illustrating an example of a functional configuration of the server apparatus 20 according to the present exemplary embodiment.

In the server apparatus 20, the CPU 21 functions as a reception unit 41, a transmission unit 42, and a processing unit 43 as illustrated in Fig. 3 by executing the information processing program.

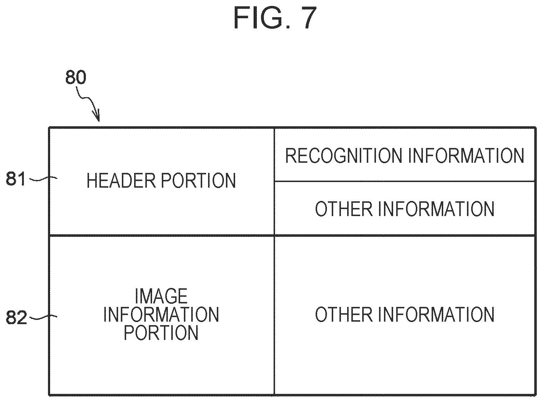

The reception unit 41 receives various types of information transmitted from each part of the information processing system 10. In the present exemplary embodiment, the reception unit 41 receives image forming data transmitted from each part of the information processing system 10. Further, the reception unit 41 receives pseudo information 80 (see Fig. 7) transmitted from the image forming apparatus 12.

The transmission unit 42 transmits various types of information to each part of the information processing system 10. In the present exemplary embodiment, the transmission unit 42 transmits the image forming data and the pseudo information 80 to the image forming apparatus 12.

The processing unit 43 is a functional unit that executes various types of processing. In the present exemplary embodiment, the processing unit 43 executes storage processing of storing the image forming data and the pseudo information 80 in the storage 24. The image forming data includes image information and recognition information.

The image information is information based on which an image is formed through the image forming processing by the image forming apparatus 12, and is information that can be interpreted by the image forming apparatus 12 in the image forming processing. Specifically, the image information is information obtained by executing conversion processing (for example, rasterizing processing) of converting page description language (PDL) data into a bitmap, and is information represented as bitmap data.

The PDL data is data described using PDL that can be interpreted by an execution apparatus that executes the conversion processing. The PDL is a computer programming language for causing the execution apparatus to execute image processing and the like. The PDL includes various formats such as a PostScript (registered trademark) (PS) format.

Note that the server apparatus 20 may execute the conversion processing, or an apparatus other than the server apparatus 20 may execute the conversion processing.

The recognition information is information causing recognition as image information (specifically, image forming data including image information) by the server apparatus 20. As the recognition information, additional information added to the image information can be used. As the additional information, specifically, for example, setting information (monochrome/color, image size, resolution, and the like) for the image forming processing and identification information (ID) for identifying image forming data can be used.

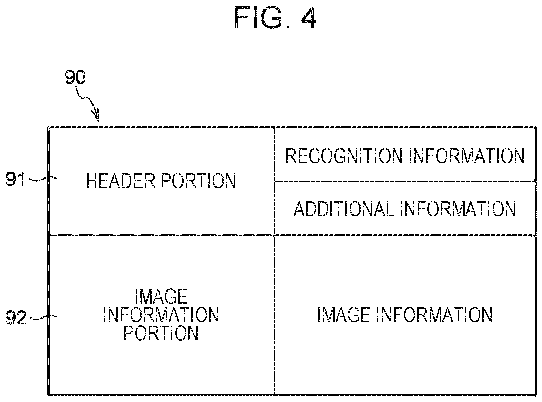

Specifically, as illustrated in Fig. 4, image forming data 90 includes, for example, an image information portion 92 and a header portion 91. The image forming data 90 has the image information included in the image information portion 92 and the recognition information included in the header portion 91.

The recognition information causes recognition as the image forming data by the processing unit 43 that executes storage processing of storing the image forming data in the storage 24.

### <Image forming apparatus 12>

The image forming apparatus 12 is an apparatus that executes image forming processing for forming an image based on image information. Specifically, the image forming apparatus 12 executes the image forming processing based on the image forming data transmitted from the server apparatus 20.

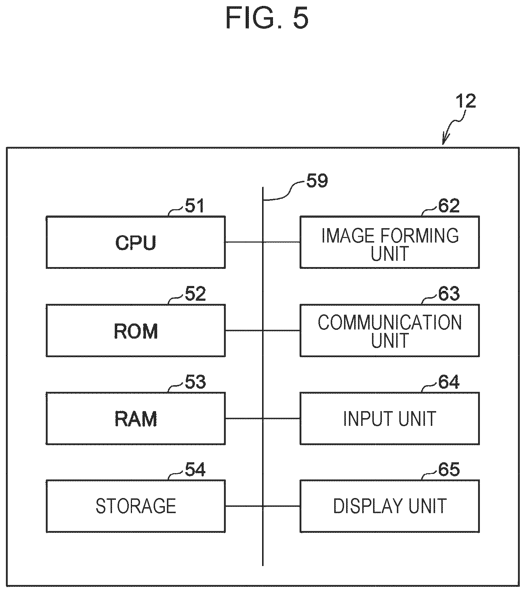

The image forming apparatus 12 has functions of a computer, and as illustrated in Fig. 5, includes a central processing unit (CPU) 51, a read only memory (ROM) 52, a random access memory (RAM) 53, a storage 54, an image forming unit 62, a communication unit 63, an input unit 64, and a display unit 65. The parts of the image forming apparatus 12 are connected to each other by, for example, a bus 59.

The image forming unit 62 is a component that forms an image on a recording medium such as a sheet. The image forming unit 62 forms an image on a recording medium by, for example, an electrophotographic method in which processes of charging, exposure, development, transfer, and fixing are performed. The image forming unit 62 may form an image on a recording medium by another method such as an inkjet method.

The communication unit 63 is a communication interface, and is a component for communicating with other apparatuses such as other image forming apparatuses 12, the server apparatus 20, and the instruction apparatus 14. Specifically, the communication unit 63 communicates with other apparatuses through the communication line 13 using at least one of wired communication and wireless communication.

The input unit 64 is a component to which an instruction is input by a user. Specifically, the input unit 64 includes, for example, an input key (for example, a keyboard, an operation button, or the like), a touch panel, and the like on which an input operation is performed by a user.

The display unit 65 is an example of a notification unit and displays presentation information to be presented to the user for notifying the user of the presentation information. The display unit 65 includes, as an example, a liquid crystal display, an organic electro luminescence (EL) display, and the like.

The display unit 65 may function as the input unit 64. In this case, as an example, the input unit is configured by a touch panel of a resistive film type, a capacitance type, or the like, and an instruction from the user is input through a contact operation by the user.

The CPU 51 is a central processing unit, and executes various programs including an information processing program and controls each part. The ROM 52 stores the various programs including the information processing program and various types of data. The RAM 53 serves as a work area to temporarily store a program or data. The storage 54 is configured by a storage medium such as a hard disk drive (HDD), a solid state drive (SSD), or a flash memory, and stores various programs including an operating system and various types of data. Note that the information processing program may be stored in the storage 54.

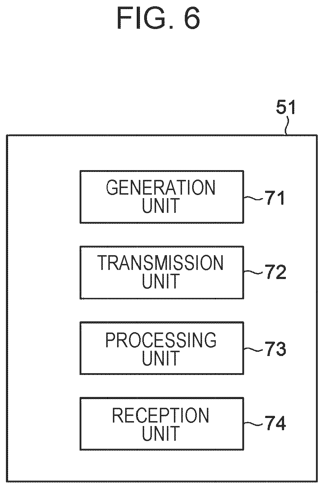

In the image forming apparatus 12, the CPU 51 reads various programs including the information processing program from the ROM 52 or the storage 54, and executes the programs using the RAM 53 as a work area. The CPU 51 realizes various functions by executing the information processing program. Functional configurations realized by cooperation between the CPU 51 as a hardware resource and the information processing program as a software resource will be described. Fig. 6 is a block diagram illustrating an example of a functional configuration of the image forming apparatus 12 according to the present exemplary embodiment.

In the image forming apparatus 12, as illustrated in Fig. 6, the CPU 51 functions as a generation unit 71, a transmission unit 72, a processing unit 73, and a reception unit 74 by executing the information processing program.

The generation unit 71 generates the pseudo information 80 (see Fig. 7). The pseudo information 80 is information processed into a format to be processable as image forming data, and is information including recognition information and information other than image information (hereinafter referred to as other information).

As described above, the recognition information is information causing recognition as image information (specifically, image forming data including image information) by the server apparatus 20. As described above, as the recognition information, additional information added to the image information can be used. As the additional information, specifically, for example, setting information (monochrome/color, image size, resolution, and the like) for the image forming processing and identification information (ID) for identifying image forming data can be used.

Specifically, the other information is information used for processing other than the image forming processing (hereinafter, referred to as other processing). The image forming data is information generated in response to an execution instruction for the image forming processing from the user, whereas the pseudo information 80 is information generated in response to an execution instruction for the other processing from the user. The other information includes information indicating the contents of the information, for what processing the information is used, and the like.

The other processing is, for example, processing involving storing information in the server apparatus 20. Examples of the information include retained information retained by the image forming apparatus 12. In this case, the generation unit 71 generates the pseudo information 80 including the retained information retained by the image forming apparatus 12 as the other information. Examples of the retained information include setting information, personal information such as a user address, and registered information (such as favorites) registered by the user. When the other information is the retained information, identification information indicating which of the image forming apparatuses 12 has generated the information is included in the other information.

More specifically, the other processing corresponds to, for example, processing in which, when the image forming apparatus 12 changes the setting, the image forming apparatus 12 causes the server apparatus 20 to store the setting information before the change by the image forming apparatus 12. In this case, the generation unit 71 generates the pseudo information 80 including the setting information before the change by the image forming apparatus 12 as the other information. In this case, the pseudo information 80 is generated for backup.

The other processing may involve processing of forming an image. In this case, the generation unit 71 generates the pseudo information 80 including the image information. Specifically, the generation unit 71 may generate the pseudo information 80 including image information having a notification content to be notified to the user. For example, as described above, the notification content includes a notification content indicating that the change of the setting has been completed and that the change of the setting has not been completed when the image forming apparatus 12 changes the setting. As the image information, for example, predetermined prepared image information can be used. In other words, image information that is not generated by the user can be used as the image information.

Specifically, as illustrated in Fig. 7, the pseudo information 80 includes, for example, an image information portion 82 and a header portion 81. The pseudo information 80 has recognition information in the header portion 81, and has the other information in at least one of the image information portion 82 and the header portion 81. In the example illustrated in Fig. 7, both the image information portion 82 and the header portion 81 have the other information.

The transmission unit 72 is a functional unit that transmits various types of information to each part of the information processing system 10. In the present exemplary embodiment, the transmission unit 72 transmits the pseudo information 80 generated by the generation unit 71 to the server apparatus 20. In this case, in the server apparatus 20, the processing unit 43 recognizes data as the image forming data based on the recognition information, and executes storage processing of storing the pseudo information 80 in the storage 24.

The processing unit 73 is a functional unit that executes various types of processing. In the present exemplary embodiment, the processing unit 73 executes the other processing. In the present exemplary embodiment, if the change of the setting in the image forming apparatus 12 is inappropriate, the processing unit 73 executes processing of transmitting the setting information before the change from the server apparatus 20 to the image forming apparatus 12.

The reception unit 74 receives various types of information transmitted from each part of the information processing system 10. In the present exemplary embodiment, for example, the reception unit 74 receives the setting information before the change transmitted from the server apparatus 20.

While two image forming apparatuses 12 are illustrated in Fig. 1, the plurality of image forming apparatuses 12 may be three or more image forming apparatuses 12.

### <Generation processing according to present exemplary embodiment>

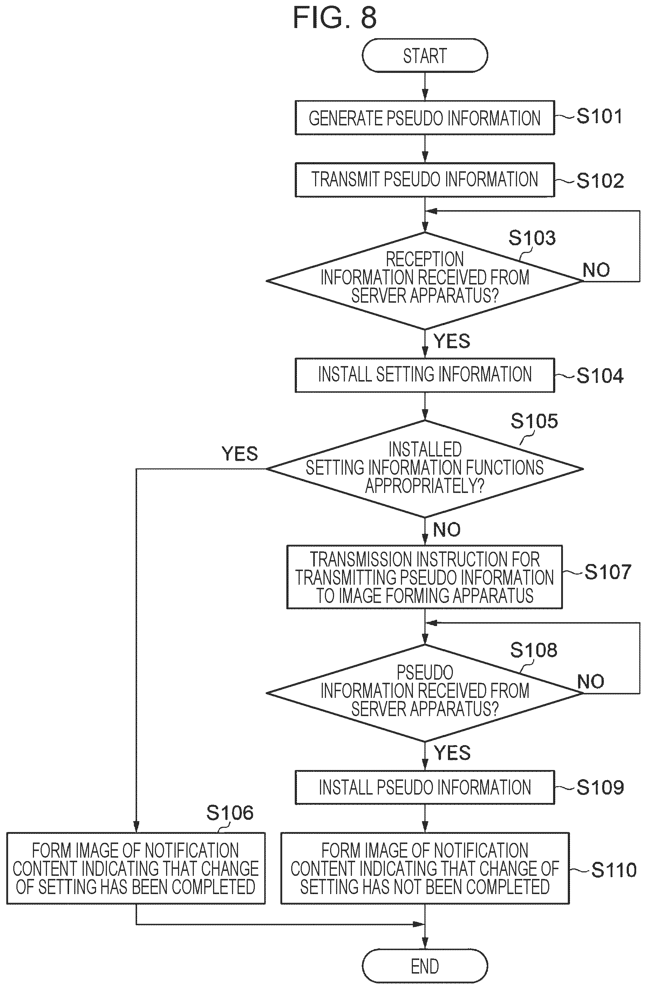

An example of generation processing executed by the image forming apparatus 12 will be described. Fig. 8 is a flowchart illustrating an example of a flow of generation processing executed in the image forming apparatus 12. The flow is an example of an information processing method.

The generation processing is processing in which the CPU 51 generates the pseudo information 80 and transmits the pseudo information 80 to the server apparatus 20. In the present exemplary embodiment, generation processing in a case where one image forming apparatus 12 among the plurality of image forming apparatuses 12 changes a setting based on setting information held by another image forming apparatus 12 will be described.

This processing starts to be executed when the one image forming apparatus 12 receives the setting information from the other image forming apparatus 12. The processing is executed by the CPU 51 reading and executing the information processing program from the ROM 52 or the storage 54.

As illustrated in Fig. 8, upon starting this processing, the CPU 51 generates the pseudo information 80 including the recognition information and the other information (step S101). The other information includes setting information before the change by the one image forming apparatus 12 and image information having a notification content to be notified to the user. The notification content indicates that the change of the setting has been completed and that the change of the setting has not been completed.

Next, the CPU 51 transmits the pseudo information 80 to the server apparatus 20 (step S102). Here, upon receiving the pseudo information 80, the server apparatus 20 transmits reception information indicating that the pseudo information 80 has been received to the one image forming apparatus 12.

Next, the CPU 51 determines whether the reception information has been received from the server apparatus 20 (step S103). Upon determining that the reception information has not been received from the server apparatus 20 (step S103: NO), the CPU 51 repeats step S103 until the reception information is received.

Upon determining that the reception information has been received from the server apparatus 20 (step S103: YES), the CPU 51 installs the setting information received from the other image forming apparatus 12 (step S104). The installation is processing of acquiring information.

Next, the CPU 51 determines whether the installed setting information functions appropriately (step S105). Upon determining that the installed setting information functions appropriately (step S105: YES), the CPU 51 forms an image of the notification content indicating that the change of the setting has been completed on a recording medium p (step S106), and ends this processing.

Upon determining that the installed setting information does not function appropriately (step S105: NO), the CPU 51 transmits, to the server apparatus 20, a transmission instruction for causing the server apparatus 20 to transmit the pseudo information 80 to the CPU 51 (that is, the image forming apparatus 12) (step S107).

Next, the CPU 51 determines whether the pseudo information 80 is received from the server apparatus 20 (step S108). Upon determining that the pseudo information 80 has not been received from the server apparatus 20 (step S108: NO), the CPU 51 repeats step S108 until the reception information is received.

Upon determining that the pseudo information 80 has been received from the server apparatus 20 (step S108: YES), the CPU 51 installs the pseudo information 80 (step S109), forms an image of a notification content indicating that the change of the setting has not been completed on the recording medium P (step S110), and ends this processing.

### <Operation according to present exemplary embodiment>

In the present exemplary embodiment, in the image forming apparatus 12, the CPU 51 generates the pseudo information 80 including the recognition information and the other information, and transmits the pseudo information 80 to the server apparatus 20.

As described above, since the pseudo information 80 includes the recognition information that causes the recognition as the image information by the server apparatus 20, the pseudo information 80 can be stored in the server apparatus 20 similarly to the image forming data.

Further, in the present exemplary embodiment, the CPU 51 generates the pseudo information 80 including the retained information retained by the image forming apparatus 12 as the other information. Therefore, the information held by the image forming apparatus 12 can be stored in the server apparatus 20.

Further, in the present exemplary embodiment, when the image forming apparatus 12 changes the setting, the CPU 51 generates the pseudo information 80 including the setting information before the change as the retained information. Therefore, when the image forming apparatus 12 changes the setting, the setting information before the change can be stored in the server apparatus 20 for backup.

Further, in the present exemplary embodiment, when the change of the setting in the image forming apparatus 12 is inappropriate, the CPU 51 causes the server apparatus 20 to transmit the setting information before the change to the image forming apparatus 12. Therefore, when the change of the setting in the image forming apparatus 12 is inappropriate, the setting of the image forming apparatus 12 can be restored to that before the change.

Further, in the present exemplary embodiment, the CPU 51 generates the pseudo information 80 including the image information. Therefore, the image forming apparatus 12 can execute the image forming processing based on the pseudo information 80.

In the present exemplary embodiment, the CPU 51 generates the pseudo information 80 including the image information having the notification content to be notified to the user. Therefore, the notification can be issued to the user using the image formed by the image forming apparatus 12.

### <Modifications>

In the present exemplary embodiment, as the other processing, a description is given on the processing in which when the image forming apparatus 12 changes the setting, the image forming apparatus 12 causes the server apparatus 20 to store the setting information before the change by the image forming apparatus 12. However, the present disclosure is not limited thereto. The other processing may be any processing other than the image forming processing.

In the present exemplary embodiment, the pseudo information 80 includes the retained information retained by the image forming apparatus 12 as the other information, but the present disclosure is not limited thereto. The other information may be any information other than the image information.

In the present exemplary embodiment, the image information is included in the pseudo information 80, but the image information may not be included.

In the present exemplary embodiment, the processor that executes the generation processing is included in the image forming apparatus 12, but the present disclosure is not limited thereto. For example, an apparatus including a processor that executes the generation processing may be configured as an external apparatus provided outside the image forming apparatus 12. In this case, the external apparatus or a system including the external apparatus can be regarded as an example of the information processing system.

In the above exemplary embodiment, the processor refers to a processor in a broad sense, and includes a general-purpose processor (for example, the above-described CPU or the like) and a dedicated processor (for example, a graphics processing unit (GPU), an application specific integrated circuit (ASIC), a field programmable gate array (FPGA), a programmable logic device, or the like).

The operation of the processor in the above-described exemplary embodiment may be performed not only by one processor but also by a plurality of processors located at physically separated positions and cooperating with each other. Furthermore, the order of the operations of the processor is not limited to the order described in the above exemplary embodiment only, and may be changed as appropriate.

The information processing system 10 according to the present exemplary embodiment is configured by a plurality of apparatuses, but is not limited thereto. The information processing system of the present disclosure may be configured by a single apparatus. That is, the "system" according to the present exemplary embodiment may be configured by a plurality of apparatuses or configured by a single apparatus.

The present disclosure is not limited to the above-described exemplary embodiments, and various modifications, changes, and improvements can be made without departing from the scope of the appended claims. For example, a plurality of the modifications described above may be combined as appropriate.

## Claims

1. An information processing system (10) comprising:
a server apparatus (20) comprising a storage unit (24) configured to store information recognized as image information, outside an image forming apparatus (12) configured to execute image forming processing of forming an image based on the image information; the information processing system (10) being **characterized in** further comprising
the image forming apparatus (12) comprising a processor (51, 71, 72) configured to
generate pseudo information (80) including recognition information causing recognition as the image information by the server apparatus (20) and information other than the image information, and transmit the pseudo information (80) to the server apparatus (20).

2. The information processing system (10) according to claim 1, wherein the processor (51, 71, 72) is configured to
generate the pseudo information (80) including retained information retained by the image forming apparatus (12) as the other information.

3. The information processing system (10) according to claim 2, wherein the processor (51, 71, 72) is configured to
generate, when the image forming apparatus (12) changes a setting, the pseudo information (80) including setting information before the change as the retained information.

4. The information processing system (10) according to claim 3, wherein the processor (51, 71, 72) is configured to
cause, when the change of the setting in the image forming apparatus (12) is inappropriate, the storage unit (24) to transmit the setting information before the change to the image forming apparatus (12).

5. The information processing system (10) according to claim 1, wherein the processor (51, 71, 72) is configured to
generate the pseudo information (80) including image information.

6. The information processing system (10) according to claim 5, wherein the processor (51, 71, 72) is configured to
generate the pseudo information including image information having a notification content to be notified to a user.

7. A program causing a computer (51, 71, 72) to execute a process for information processing, **characterized in that** the process comprises:
generating pseudo information (80) including
recognition information causing recognition as image information by a server apparatus (20) configured to store information recognized as the image information, outside an image forming apparatus (12) configured to execute image forming processing of forming an image based on the image information, and
information other than the image information; and
transmitting the pseudo information (80) to the server apparatus (20).

8. An information processing method, **characterized in** comprising:
generating pseudo information (80) including
recognition information causing recognition as image information by a server apparatus (20) configured to store information recognized as the image information, outside an image forming apparatus (12) configured to execute image forming processing of forming an image based on the image information, and
information other than the image information; and
transmitting the pseudo information (80) to the server apparatus (20).

## Patentansprüche

1. Informationsverarbeitungssystem (10), umfassend:
eine Servervorrichtung (20), die eine Speichereinheit (24) umfasst, die so konfiguriert ist, dass sie Informationen speichert, die als Bildinformationen erkannt werden,
außerhalb einer Bilderzeugungsvorrichtung (12), die so konfiguriert ist, dass sie Bilderzeugungsverarbeitung des Erzeugens eines Bildes auf der Grundlage der Bildinformationen ausführt; wobei das Informationsverarbeitungssystem (10) **dadurch gekennzeichnet ist, dass** es ferner umfasst:
die Bilderzeugungsvorrichtung (12), die einen Prozessor (51, 71, 72) umfasst, der so konfiguriert ist, dass er:
Pseudoinformationen (80), die Erkennungsinformationen, die Erkennung als die Bildinformationen durch die Servervorrichtung (20) verursachen, und Informationen, die von den Bildinformationen verschieden sind, enthalten, erzeugt und die Pseudoinformationen (80) an die Servervorrichtung (20) überträgt.

2. Informationsverarbeitungssystem (10) nach Anspruch 1, wobei der Prozessor (51, 71, 72) so konfiguriert ist, dass er:
die Pseudoinformationen (80), die beibehaltene Informationen, die von der Bilderzeugungsvorrichtung (12) als die anderen Informationen beibehalten werden, enthalten, erzeugt.

3. Informationsverarbeitungssystem (10) nach Anspruch 2, wobei der Prozessor (51, 71, 72) so konfiguriert ist, dass er:
wenn die Bilderzeugungsvorrichtung (12) eine Einstellung ändert, die Pseudoinformationen (80), die Einstellinformationen vor der Änderung als die beibehaltenen Informationen enthalten, erzeugt.

4. Informationsverarbeitungssystem (10) nach Anspruch 3, wobei der Prozessor (51, 71, 72) so konfiguriert ist, dass er:
wenn die Änderung der Einstellung in der Bilderzeugungsvorrichtung (12) unangemessen ist, die Speichereinheit (24) veranlasst, die Einstellinformationen vor der Änderung an die Bilderzeugungsvorrichtung (12) zu übertragen.

5. Informationsverarbeitungssystem (10) nach Anspruch 1, wobei der Prozessor (51, 71, 72) so konfiguriert ist, dass er:
die Pseudoinformationen (80), die Bildinformationen enthalten, erzeugt.

6. Informationsverarbeitungssystem (10) nach Anspruch 5, wobei der Prozessor (51, 71, 72) so konfiguriert ist, dass er:
die Pseudoinformationen, die Bildinformationen enthalten, die einen Benachrichtigungsinhalt, der einem Benutzer mitzuteilen ist, aufweisen, erzeugt.

7. Programm, das einen Computer (51, 71, 72) veranlasst, einen Prozess zur Informationsverarbeitung auszuführen, **dadurch gekennzeichnet, dass** der Prozess umfasst:
Erzeugen von Pseudoinformationen (80), die enthalten:
Erkennungsinformationen, die Erkennung als Bildinformationen durch eine Servervorrichtung (20), die so konfiguriert ist, dass sie Informationen speichert, die als die Bildinformationen erkannt werden, außerhalb einer Bilderzeugungsvorrichtung (12), die so konfiguriert ist, dass sie Bilderzeugungsverarbeitung des Erzeugens eine s Bildes auf der Grundlage der Bildinformationen ausführt, verursachen, und
Informationen, die von den Bildinformationen verschieden sind; und
Übertragen der Pseudoinformationen (80) an die Servervorrichtung (20).

8. Informationsverarbeitungsverfahren, **dadurch gekennzeichnet, dass** es umfasst:
Erzeugen von Pseudoinformationen (80), die enthalten:
Erkennungsinformationen, die Erkennung als Bildinformationen durch eine Servervorrichtung (20), die so konfiguriert ist, dass sie Informationen speichert, die als die Bildinformationen erkannt werden, außerhalb einer Bilderzeugungsvorrichtung (12), die so konfiguriert ist, dass sie Bilderzeugungsverarbeitung des Erzeugens eine s Bildes auf der Grundlage der Bildinformationen ausführt, verursachen, und
Informationen, die von den Bildinformationen verschieden sind; und
Übertragen der Pseudoinformationen (80) an die Servervorrichtung (20).

## Revendications

1. Système de traitement d'informations (10) comprenant :
un appareil serveur (20) comprenant une unité de stockage (24) configurée pour stocker des informations reconnues comme des informations d'image, à l'extérieur d'un appareil de formation d'images (12) configuré pour exécuter un traitement de formation d'images consistant à former une image sur la base des informations d'image ; le système de traitement d'informations (10) étant **caractérisé en ce qu'**il comprend en outre
l'appareil de formation d'images (12) comprenant un processeur (51, 71, 72) configuré pour
générer des pseudo-informations (80) incluant des informations de reconnaissance provoquant une reconnaissance comme les informations d'image par l'appareil serveur (20) et des informations autres que les informations d'image, et transmettre les pseudo-informations (80) à l'appareil serveur (20).

2. Système de traitement d'informations (10) selon la revendication 1, dans lequel le processeur (51, 71, 72) est configuré pour
générer les pseudo-informations (80) incluant des informations conservées qui sont conservées par l'appareil de formation d'images (12) comme les informations autres.

3. Système de traitement d'informations (10) selon la revendication 2, dans lequel le processeur (51, 71, 72) est configuré pour
générer, lorsque l'appareil de formation d'images (12) modifie un réglage, les pseudo-informations (80) incluant des informations de réglage avant la modification comme les informations conservées.

4. Système de traitement d'informations (10) selon la revendication 3, dans lequel le processeur (51, 71, 72) est configuré pour
amener, lorsque la modification du réglage dans l'appareil de formation d'images (12) est inappropriée, l'unité de stockage (24) à transmettre les informations de réglage avant la modification à l'appareil de formation d'images (12).

5. Système de traitement d'informations (10) selon la revendication 1, dans lequel le processeur (51, 71, 72) est configuré pour
générer les pseudo-informations (80) incluant des informations d'image.

6. Système de traitement d'informations (10) selon la revendication 5, dans lequel le processeur (51, 71, 72) est configuré pour
générer les pseudo-informations incluant des informations d'image ayant un contenu de notification à notifier à un utilisateur.

7. Programme amenant un ordinateur (51, 71, 72) à exécuter un processus de traitement d'informations, **caractérisé en ce que** le processus comprend :
générer des pseudo-informations (80) incluant
des informations de reconnaissance provoquant une reconnaissance comme des informations d'image par un appareil serveur (20) configuré pour stocker des informations reconnues comme les informations d'image, à l'extérieur d'un appareil de formation d'images (12) configuré pour exécuter un traitement de formation d'images consistant à former une image sur la base des informations d'image, et
des informations autres que les informations d'image ; et
transmettre les pseudo-informations (80) à l'appareil serveur (20).

8. Procédé de traitement d'informations, **caractérisé en ce qu'**il comprend :
générer des pseudo-informations (80) incluant
des informations de reconnaissance provoquant une reconnaissance comme des informations d'image par un appareil serveur (20) configuré pour stocker des informations reconnues comme les informations d'image, à l'extérieur d'un appareil de formation d'images (12) configuré pour exécuter un traitement de formation d'images consistant à former une image sur la base des informations d'image, et
des informations autres que les informations d'image ; et
transmettre les pseudo-informations (80) à l'appareil serveur (20).
